# EUROPÄISCHE PATENTSCHRIFT

(11) **EP 0 852 704 B1**
(45) Veröffentlichungstag und Bekanntmachung des Hinweises auf die Patenterteilung: **05.12.2001**
(21) Anmeldenummer: 96944555.0
(22) Anmeldetag: 17.09.1996
(51) Int. Cl.: G01F 1/58

(54) **INDUKTIVER DURCHFLUSSMESSER**
INDUCTIVE FLOW METER
DEBITMETRE INDUCTIF

(30) Priorität: 27.09.1995 DE 19535998
(43) Veröffentlichungstag der Anmeldung: 15.07.1998
(73) Patentinhaber: KETELSEN, Broder, D-37124 Rosdorf (DE); KETELSEN, Andres, D-37124 Rosdorf (DE)
(72) Erfinder: KETELSEN, Andres, D-37124 Rosdorf (DE); KETELSEN, Jörn-Ove, D-37139 Adelebsen (DE)
(74) Vertreter: Kuhnen & Wacker
(86) Internationale Anmeldenummer: DE9601760
(87) Internationale Veröffentlichungsnummer: WO9712207

(56) Entgegenhaltungen:
- DE-A- 1 573 066
- DE-A- 2 009 513
- DE-A- 3 401 377
- US-A- 4 358 963
- US-A- 4 428 241

## Beschreibung

Die Erfindung betrifft induktive Durchflußmesser mit einem von einer elektrisch isolierenden Innenwand begrenzten Strömungskanalabschnitt, der zwei einander über einen Querschnitt dieses Strömungskanalabschnittes diametral gegenüberstehende und dem zu untersuchenden Strömungsmittelstrom ausgesetzte Elektroden enthält. Zu den Elektroden sind Meßsignalleitungen isoliert hingeführt und ein Magnetfelderzeugungssystem außerhalb des Strömungskanalabschnittes dient zur Erzeugung eines den Strömungskanalabschnitt im Bereich des genannten, die Elektroden enthaltenden Querschnittes durchsetzenden Magnetfeldes, welches im wesentlichen senkrecht zur Verbindungslinie zwischen den Elektroden und senkrecht zur Längsachse des Strömungskanalabschnittes orientiert ist und zwischen Polschuhen des Magnetfelderzeugungssystems errichtet wird, welche auf einander gegenüberliegenden Seiten des Strömungskanalabschnittes angeordnet sind. Die Erregerwicklungen des Magnetfelderzeugungssystems können mit Gleichstrom oder mit Wechselstrom erregt werden und in dem die Elektroden enthaltenden Meßkreis kann ein von der Strömung eines elektrisch leitfähigen Strömungsmittels im Strömungskanalabschnitt abhängiges Meßsignal, nämlich je nach Erregung der Erregerwicklung des Magnetfelderzeugungssystems, ein Gleichspannungssignal oder ein Wechselspannungssignal abgeleitet werden. Induktive Durchflußmesser-dieses allgemeinen Aufbaus und ihre Wirkungsweise sind dem Fachmann bekannt. Siehe z.B. DE-A-3 401 377.

Die allgemein bekannten Konstruktionen induktiver Durchflußmesser eignen sich nicht ohne weiteres für die Fertigung in großer Stückzahl, haben mitunter einen komplizierten und kostenverursachenden Aufbau und machen umfangreiche Kalibrier- und Justierarbeiten erforderlich. Auch ist der Energieverbrauch vieler induktiver Durchflußmesser verhältnismäßig hoch, was in manchen Anwendungsfällen die Verwendung solcher bekannter induktiver Durchflußmesser ausschließt.

Aus der US-PS 4,428,241 ist es bekannt, im Meßkanalkörper auf seinen den Polschuhen benachbarten, einander gegenüberliegenden Wandseiten Vertiefungen vorzusehen, in die die entsprechend geformten Polschuhteile eingreifen, wodurch eine exakte Positionierung des Meßkanalkörpers gegenüber Gehäuseteilen und gegenüber dem Magnetfelderzeugungssystem erreicht wird.

Aus der DE-OS 1 773 448 ist es ferner bekannt, eine genaue Positionierung der Elektroden und auch der zu ihnen führenden Meßsignalleitungen relativ zu dem Meßsignalkörper dadurch zu erreichen, daß die Elektroden und die Meßsignalleitungen in den Meßsignalkörper eingegossen werden und dadurch in ihrer relativen Lage zum Strömungskanalabschnitt festliegen.

Durch die Erfindung soll die Aufgabe gelöst werden, sowohl das Magnetfelderzeugungssystem, als auch den Meßkanalkörper mit dem darin geführten Meßkanalabschnitt und die Elektroden mit den zu ihnen führenden Meßsignalleitungen in definierter relativer Lage zueinander zu halten, so daß bei der Serienfertigung entsprechender induktiver Durchflußmesser umfangreiche Abgleich- und Justierarbeiten nicht erforderlich sind und gleichzeitig ein hoher Wirkungsgrad erzielt werden kann.

Diese Aufgabe wird erfindungsgemäß durch die im Anspruch 1 angegebenen Merkmale gelöst. Vorteilhafte Ausgestaltungen und Weiterbildungen sind Gegenstand der diesem Anspruch nachgeordneten weiteren Patentansprüche.

Folgende Vorteile des hier angegebenen induktiven Durchflußmessers seien hervorgehoben:

Der induktive Durchflußmesser der hier angegebenen Art hat einen sehr geringen Energieverbrauch, so daß bei seinem Betrieb Explosionsschutzbestimmungen eingehalten werden können und auch der Betrieb mit Batterie wirtschaftlich sinnvoll möglich ist, derart, daß sich diesem Meßgerät besondere Anwendungsgebiete eröffnen. Der geringe Polabstand der Pole des Magnetfelderzeugungssystems ist hier besonders bedeutsam.

Die einzelnen Baugruppen oder Baueinheiten des hier vorgeschlagenen induktiven Durchflußmessers gestatten die Fertigung in Großserie und zu extrem niedrigen Herstellungskosten. Die Kalibrierparameter können im Stichprobenverfahren für ein Fertigungslos ermittelt werden, so daß nicht jedes Gerät einzeln durchgemessen werden muß. Trotz des Eingreifens der Polschuhteile in den Meßkanalkörper können in ihm die Meßsignalleitungen im wesentlichen beliebig verlegt werden.

Der Aufbau bedingt, daß kostenintensive Abgleich- und Justierarbeiten größtenteils entfallen können und das Gerät über seine gesamte Betriebszeit einen stabilen Nullpunkt behält.

Nachfolgend werden einige Ausführungsbeispiele anhand der Zeichnungen beschrieben. Es stellen dar:
- Fig. 1: eine schematische perspektivische Ansicht eines Meßkanalkörpers und in Vertiefungen desselben einzusetzender Polschuhteile eines Magnetfelderzeugungssystems zur Bildung eines induktiven Durchflußmessers der hier vorgeschlagenen Art,
- Fig. 2: einen Radialschnitt durch die Anordnung von Fig. 1 in deren zusammengesetztem Zustand sowie in einem die Elektroden enthaltenden Querschnittsbereich des Meßsignalkörpers,
- Fig. 3: einen Radialschnitt durch die Anordnung von Fig. 1 in deren zusammengesetztem Zustand sowie in einem Querschnittsbereich stromaufwärts oder stromabwärts von dem Querschnittsbereich gemäß Fig. 2,
- Fig. 4: eine ähnliche Darstellung wie Fig. 1 von einer gegenüber Fig. 1 abgewandelten Ausführungsform eines Meßsignalkörpers und in Vertiefungen desselben einzusetzender Polschuhteile zur Bildung eines anderen induktiven Durchflußmessers der hier angegebenen Art,
- Fig. 5: einen Radialschnitt durch eine praktische Ausführungsform eines induktiven Durchflußmessers der hier angegebenen Art im Bereich des Magnetfelderzeugungssystems sowie der die Elektroden enthaltenden Querschnittsebene des Meßkanalkörpers und
- Fig. 6: eine Darstellung eines Radialschnittes durch eine andere praktische Ausführungsform eines induktiven Durchflußmessers der hier angegebenen Art im Bereich der die Elektroden enthaltenden Querschnittsebene des Meßkanalkörpers.

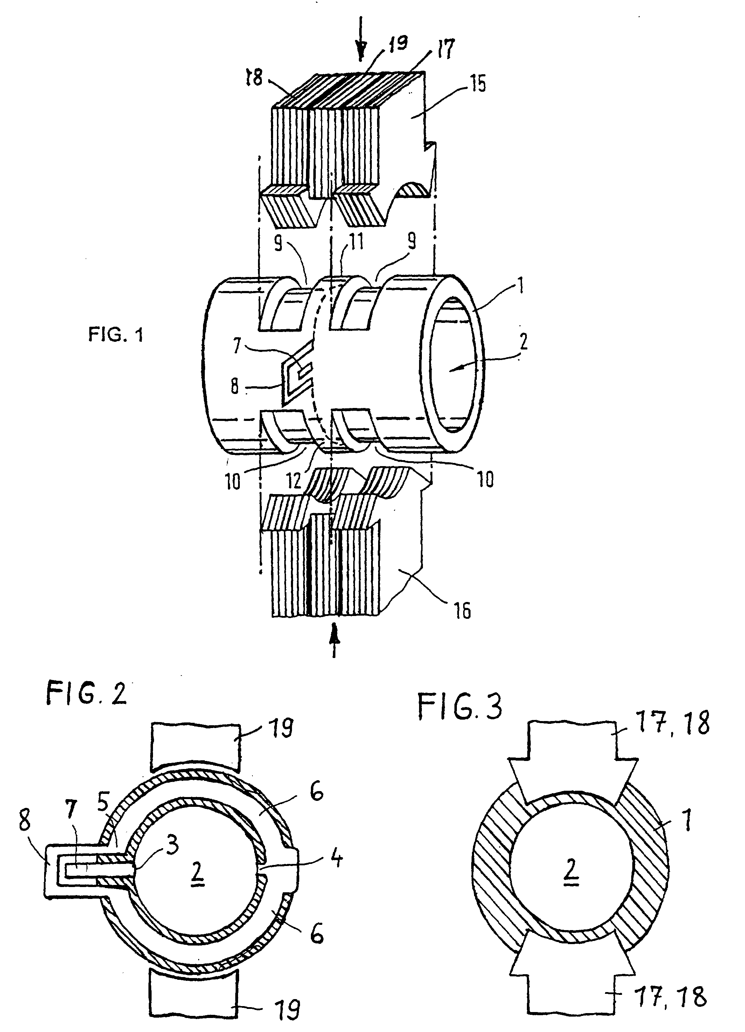

In Fig. 1 ist ein Meßkanalkörper 1 in Gestalt eines im wesentlichen hohlzylindrischen Rohrstücks gezeigt, welches als Kunststoff-Spritzgußteil ausgebildet ist.

Das Rohrstück enthält einen Strömungskanalabschnitt 2, durch welchen über geeignete Rohranschlüsse oder Rohranschlußstücke der Strom eines elektrisch leitfähigen Strömungsmittels geleitet wird, das Gegenstand der Messungen des induktiven Durchflußmessers ist. An der elektrisch isolierenden Innenwand des Strömungskanalabschnittes des Meßkanalkörpers 1 stehen einander, wie aus Fig. 2 ersichtlich, Elektroden 3 und 4 gegenüber, welche dem zu untersuchenden Strömungsmittel ausgesetzt sind und zu denen isoliert Signalleitungen 5 und 6 durch das Material des Meßkanalkörpers 1 hindurch hingeführt sind, wobei die Anschlüsse zu den Meßsignalleitungen 5 und 6 die Gestalt von Anschlußfahnen 7 bzw. 8 haben, welche aus der zylindrischen Außenwand des Meßkanalkörpers 1 hervorstehen. Die Anschlußfahne 8 umgibt die Anschlußfahne 7 U-förmig und bildet zusammen mit den zugehörigen Meßsignalleitungsabschnitten 6 einen Kurzschlußring, welcher in an sich bekannter Weise eine störungsfreie Signalübertragung zwischen der Elektrode 4 und der Meßkanalkörperseite gestattet, an der sich die Elektrode 3 befindet.

Auf der Oberseite des Meßkanalkörpers 1 mit Bezug auf die in Fig. 1 gezeigte Stellung befindet sich eine hohlzylindersektorförmige Vertiefung 9 und auf der Unterseite des Meßkanalkörpers 1 mit Bezug auf die in Fig. 1 gezeigte Lage befindet sich entsprechend diametral gegenüberliegend eine hohlzylindersektorförmige Vertiefung 10. Die hohlzylindersektorförmige Vertiefung 9 und die hohlzylindersektorförmige Vertiefung 10 bestehen jeweils aus zwei axialen Abschnitten. Mit anderen Worten, die Vertiefungen 9 und 10 enthalten in ihrer axialen Mitte jeweils ringsektorförmige Stege 11 bzw. 12. Auf die Bedeutung dieser Stege wird weiter unten näher eingegangen. Die Tiefe der Vertiefungen 9 und 10 ist, wie aus Fig. 3 erkennbar, so gewählt daß der Grund der Vertiefungen durch Wandstücke ausreichender Stärke des Meßkanalkörpermaterials 13 bzw. 14 von dem Strömungskanalabschnitt des Meßkanalkörpers getrennt bleibt.

In die Vertiefungen 9 und 10 werden in radialer Richtung auf die Langsachse des Strömungskanalabschnittes hin der Gestalt der Vertiefungen entsprechend geformte Polschuhteile 15 bzw. 16 der Polschuhe des Magnetfelderzeugungssystems des Durchflußmessers eingeschoben. Bei der in den Fig. 1 bis 3 gezeigten Ausführungsform bestehen die Polschuhe 15 und 16, die damit einstückig verbundenen, mit den Erregerwicklungen des Magnetfelderzeugungssystems umwickelten Kerne und die mit diesen wiederum zur Vervollständigung des magnetischen Schließungskreises verbundenen Jochteile aus drei axial aneinander anschließenden Paketen von Trafoblechen, nämlich zwei Trafoblechpaketen 17 und 18 mit in die axialen Abschnitte der Vertiefungen 9 und 10 im zusammengebauten Zustand hineinreichenden Polschuhteilen der in Fig. 3 in Stirnansicht gezeigten Formgebung, und einem dazwischenliegenden Blechpaket 19 mit in radialer Richtung weiter nach außen zurückspringender Profilierung entsprechend der in Fig. 2 in Stirnansicht gezeigten Formgebung, derart, daß sich zwischen den Blechpaketen 17 und 18 in den Polschuhen 15 und 16 in der Polschuhfläche eine Ringnut befindet, welche den ringsektorförmigen Steg 11 bzw. 12 aufnimmt.

Die Vertiefungen 9 und 10 und die darin eingreifenden Polschuhteile der Polschuhe 15 und 16 bewirken eine präzise gegenseitige Fixierung des Magnetfelderzeugungssystems und des Meßkanalkörpers 1 in zusammengebautem Zustand, so daß Ausricht- und Justierarbeiten zwischen den beiden genannten Baueinheiten nicht erforderlich sind. Außerdem werden die Polschuhflächen im zusammengebauten Zustand gegen den dünnwandigen Grund der Vertiefungen 9 und 10 angedrückt und gewähren den dünnwandigen Bereichen 13 und 14 eine Abstützung gegen einen erhöhten Innendruck im Strömungskanalabschnitt 2. Die dünnwandigen Abschnitte 13 und 14 ermöglichen geringere Abstände zwischen den Polschuhflächen und damit eine Erhöhung des gesamten Wirkungsgrades des Gerätes.

In den ringsektorförmigen Stegen 11 und 12 des als Kunststoff-Spritzgußteil ausgebildeten Meßkanalkörpers 1 sind die Meßsignalleitungsabschnitte 6 in der aus Fig. 2 ersichtlichen Weise eingebettet. Bei der Herstellung des Meßkanalkörpers 1 können die von Metallfolien-Stanzzuschnitten gebildeten Signalleitungen und die einstückig daran angeformten Elektroden entsprechend der in Fig. 2 schematisch gezeigten Gestalt in eine Spritzgußform eingelegt werden und dann zur Einbettung in das Meßkanalkörpermaterial mit Kunststoff umspritzt werden. Bei dieser Art und Weise der Herstellung läßt sich eine sehr präzise Lage der Elektroden 3 und 4 und den dazugehörigen Meßsignalleitungsabschnitten 5 und 6 in dem Kunststoff-Spritzgußkörper erreichen, der wiederum aufgrund des Zusammenwirkens zwischen den Vertiefungen 9 und 10 und den Polschuhteilen der Polschuhe 15 und 16 zum Magnetfelderzeugungssystem eine durch die Herstellungs- und Zusammenbautechnik bedingte präzise Lage besitzt, welche Justierund Abgleicharbeiten entbehrlich macht.

In Abwandlung der in den Fig. 1 bis 3 gezeigten Konstruktion kann der Meßkanalkörper 1 auch in einer die Elektroden 3 und 4 enthaltenden Querschnittsebene geteilt und zusammensteckbar bzw. zusammenspannbar ausgeführt sein und die Elektroden und ihre zugehörigen Signalleitungen in Gestalt der Metallfolienstanzteile werden dann in entsprechende Ausnehmungen in der Teilfuge zwischen den beiden Axialabschnitten eines so ausgebildeten Meßkanalkörpers eingelegt und dort gehalten.

Gemäß einer weiteren Abwandlung ist es möglich, Teile des den Meßkanalkörper 1 bildenden Kunststoff-Spritzgußteils mit einer Stahl-, Keramik- oder dergleichen Einlage zu versehen.

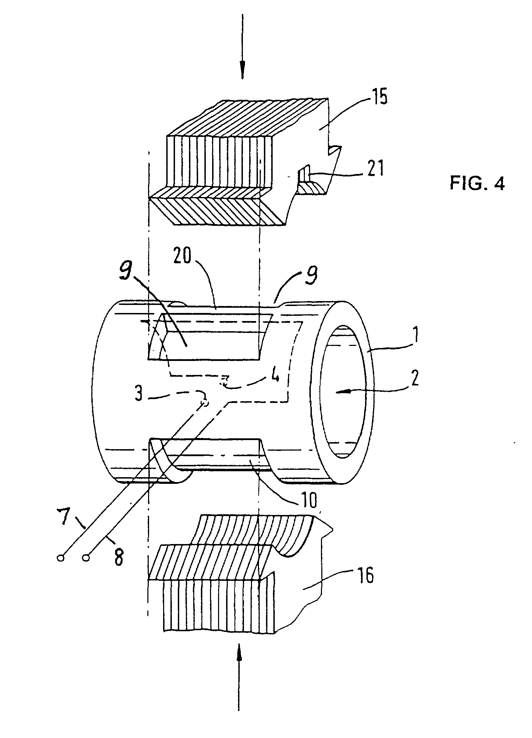

Bei der in Fig. 4 gezeigten Anordnung zur Bildung einer gegenüber der Ausführungsform nach den Fig. 1 bis 3 abgewandelten Ausführungsform eines induktiven Durchflußmessers der vorliegend angegebenen Art enthält die obere hohlzylindersektorförmige Vertiefung 9 des Meßkanalkörpers 1 einen axial verlaufenden, leistenförmigen Steg und die Polschuhfläche des in die Vertiefung 9 eingreifenden Polschuhteils des Polschuhs 15 enthält entsprechend eine axial verlaufende Nut 21, welche den Steg 20 aufnimmt, wenn der Polschuh 15 radial in Richtung auf die Längsachse des Strömungskanalabschnittes 2 vorgeschoben ist und die Polschuhteile in die Vertiefung 9 eingreifen. Auf der gegenüberliegenden Seite befindet sich in der Wand des Meßkanalkörpers 1 eine durch keinen Steg unterteilte hohlzylindersektorförmige Vertiefung 10 und demgemäß befindet sich in der Polschuhfläche des in die Vertiefung 10 einzuschiebenden Polschuhteils des Polschuhs 16 auch keine Nut.

Auch bei der Ausführungsform nach Fig. 4 bestehen die Polschuhe, die damit einstückig verbundenen und mit der Erregerwicklung bewickelten Kerne sowie schließlich damit wiederum verbundene Jochteile zur Vollendung des magnetischen Rückschlusses aus Trafoblechpaketen.

Die der auf der Innenseite des Meßkanalkörpers 1 befindliche Elektrode 3 ist unmittelbar über eine isolierte Meßsignalleitung durch die Wand des Meßkanalkörpers 1 hindurch zu dem Anschluß 7 verbunden. Demgegenüber hat die Verbindung zwischen der Elektrode 4 und dem Anschluß 8 zur Gewährleistung symmetrischer Lagen von Signalleitungsabschnitten relativ zu dem Magnetfeld des Magnetfelderzeugungssystems folgenden Verlauf:

Von der Elektrode 4 verläuft ein Leiterstück zunächst in radialer Richtung nach außen etwa bis zur Mitte der Wandstärke des Meßkanalkörpers 1. Dann schließt sich ein axiales Leiterstück an, welches jedenfalls länger ist als die halbe Stärke der Blechpakete der Polschuhe 15 und 16. Nun folgt der Leiterverlauf einem Viertelkreisbogen nach aufwärts, stets innerhalb der Wandstärke des Meßkanalkörpers 1 verbleibend. Im Scheitelbereich folgt jetzt ein axial orientiertes Leiterstück, welches in den leistenförmigen Steg 20 des Meßkanalkörpers 1 eingebettet ist und schließlich die gegenüberliegende Seite der Vertiefung 9 erreicht, um dann in einem weiteren Viertelkreisbogen nach abwärts innerhalb der Wandstärke des Meßkanalkörpers 1 in axial fluchtende Stellung mit der Elektrode 3 zu kommen. Ein kurzes axial verlaufendes Leiterstück führt dann die Meßsignalleitung zu einem axial neben der Elektrode 3 gelegenen Punkt, von wo aus radial nach außen verlaufend die Verbindung zu dem Anschluß 8 hergestellt wird. Dieser Verlauf ist aus Fig. 4 ohne weiteres zu erkennen. Am Orte des durch unterbrochene Linienzüge angedeuteten Meßsignalleitungsverlaufs können ähnlich wie bei der Ausführungsform nach den Fig. 1 bis 3 Leiterfolienzuschnitte vorgesehen sein, welche aus Stanzzuschnitten gebogen werden können und in den Meßkanalkörper eingegossen werden.

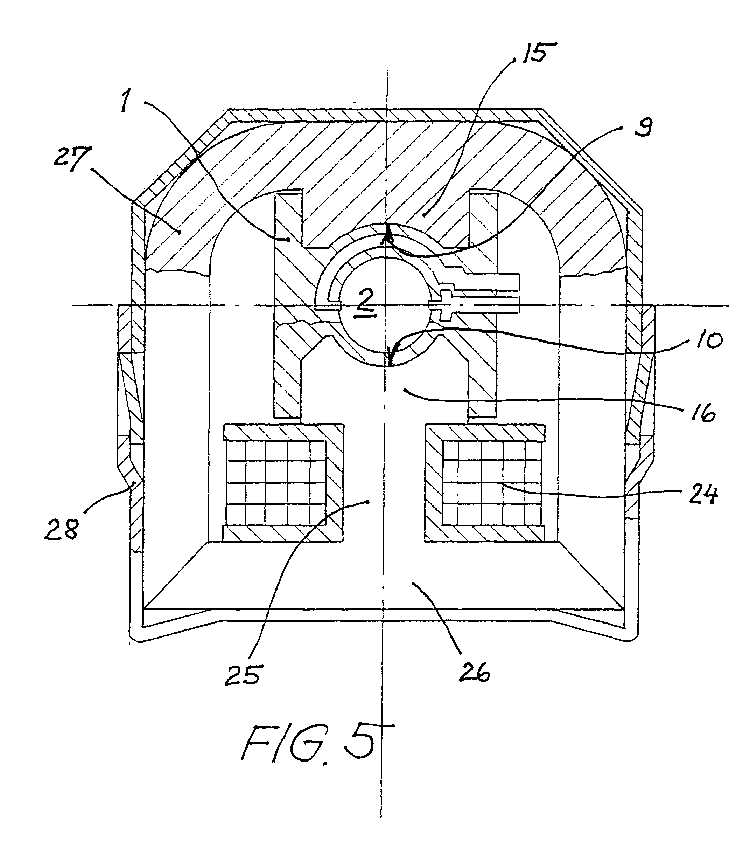

Fig. 5 zeigt eine Ausführungsform eines induktiven Durchflußmessers der vorliegend angegebenen Art, bei der nur ein Polschuh, nämlich vorliegend der Polschuh 16 einstückig mit einem mit einer Erregerspule 24 umgebenen Kernabschnitt 25 und dieser wiederum einstückig mit einem Jochabschnitt 26 verbunden ist, während der Polschuh 15 unmittelbar mit einem U-förmig gestalteten Jochteil 27 verbunden ist. Die Enden des Jochabschnittes 26 und des U-förmigen Jochteiles 27 sind in der aus Fig. 5 ersichtlichen Weise auf Gehrung geschnitten und die aus dem Polschuh 15 und dem Jochteil 27 einerseits und dem Polschuh 16, dem Kernabschnitt 25 und dem Jochabschnitt 26 andererseits gebildeten Baueinheiten können auf die Längsachse des Strömungskanalabschnittes 2 des Meßkanalkörpers 1 zu bewegt und zusammengesetzt werden. Sodann werden die Baueinheiten durch einen Spannrahmen 28 zusammengespannt.

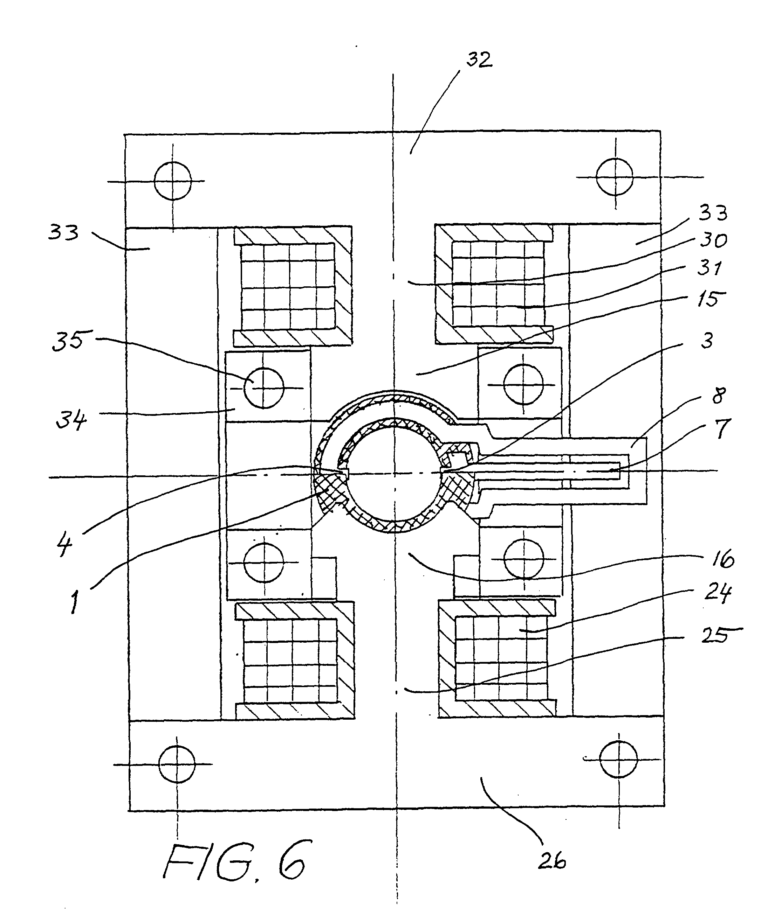

Der Meßkanalkörper 1 hat bei der Ausführungsform nach Fig. 5 abschnittsweise quaderförmige Gestalt und ist mit einer den Strömungskanalabschnitt 2 bildenden zylindrischen Bohrung versehen, welche bei der Herstellung des Meßkanalkörpers als Spritzgußteil eingeformt ist. Zu der Darstellung von Fig. 5 ist noch zu sagen, daß im Bereich oberhalb der Mittellängsachse des Strömungskanalabschnittes 2 im Querschnitt diejenigen Verhältnisse gezeigt sind, wie sie Fig. 2 entsprechen, während unterhalb dieses Niveaus die Querschnittsverhältnisse gezeigt sind, welche der Darstellung von Fig. 3 entsprechen. Dabei ist allerdings zu bemerken, daß bei der Ausführungsform von Fig. 5 aufgrund der etwa quaderförmigen äußeren Gestalt des Meßkanalkörpers 1 dieser auch in demjenigen Querschnittsbereich Vertiefungen aufweist, welcher die Meßsignalleitungen in den sie umkleidenden Stegen des Meßkanalkörpers enthält. Mit anderen Worten, die Gestalt der Vertiefungen 9 und 10 des Meßkanalkörpers 1 der Ausführungsform nach Fig. 5 ergibt sich für den Fachmann aus den vorstehenden Erläuterungen zu der Ausführungsform nach den Fig. 1 bis 3 unter Berücksichtigung einer quaderförmigen äußeren Gestalt des Meßkanalkörpers. Bei der Ausführungsform nach Fig. 6 ist ähnlich wie bei der Ausführungsform nach Fig. 5 aus dem Polschuh 16, dem damit einstückig verbundenen Kernabschnitt 25 und dem Jochteil 26 eine erste Baueinheit gebildet. Der Polschuh 15 ist jedoch ebenfalls mit einem von einer weiteren Erregerwicklung 30 umgebenen Kernabschnitt 31, und dieser mit einem Jochabschnitt 32 einstückig verbunden und bildet eine weitere Baueinheit. Die Polschuhteile der Polschuhe 15 und 16 greifen in die Vertiefungen des als Rohrstück ausgebildeten Meßkanalkörpers 1 ein, ähnlich, wie dies im Zusammenhang mit den Fig. 1 bis 3 beschrieben wurde. Die beiden Baueinheiten, denen die Polschuhe 15 und 16 angehören sind durch insgesamt vier in axialer Richtung an die Jochabschnitte 26 und 32 angesetzte weitere Jochabschnitte 33 verbunden, nämlich zwei in Fig. 6 dargestellte, mit Bezug auf die Blickrichtung von Fig. 6 unterhalb der Enden der Jochabschnitte 32 gelegene Jochabschnitte und zwei weitere, in Fig. 6 ab genommen dargestellte, von oben auf die Enden der Jochabschnitte 32 und 26 aufgelegte Jochabschnitte 33. Diese Ausbildung ist zweckmäßig, da sie große Berührungsflächen zwischen den beispielsweise durch Schrauben zusammengehaltenen Jochabschnitten 26, 32 und 33 ergibt und ferner im Bereich der die Elektroden 3 und 4 enthaltenden Radialebene einen Spaltraum zur Wegführung der Anschlüsse 7 und 8 von den Signalleitungen schafft, wie der Fachmann aus der Darstellung von Fig. 6 erkennt.

Ähnlich der in Fig. 1 gezeigten Anordnung hat bei der Ausführungsform nach Fig. 6 der Meßkanalkörper 1 im wesentlichen die Gestalt eines Hohlzylinder-Längenstückes, das unter Zwischenlage von Dichtungen zwischen Rohranschlußteilen eingespannt gehalten ist. Die Strömungskanäle der Rohranschlußteile fluchten mit dem Strömungskanalabschnitt 2 und die einander zugekehrten Seiten der Rohranschlußteile weisen auf den einander zugekehrten Seiten in Stirnansicht etwa rechteckige Flansche 34 auf, die, wie aus Fig. 6 erkennbar, mit einander gegenüberstehenden, die Polschuhe 15 und 16 aufnehmenden Ausschnitte sowie mit weiteren, einander gegenüberstehenden Ausschnitten für den Durchtritt der Anschlüsse 7 und 8 versehen sind. Mittels durch Bohrungen 35 geführter Spannbolzen können die Rohranschlußteile gegen die Enden des Meßkanalkörpers 1 und gegeneinander angespannt werden.

Eine andere, in den Zeichnungen nicht gezeigte Ausführungsform sieht vor, Rohrleitungsanschlüsse jeweils an den Enden des Strömungskanalabschnittes 2 einstückig an den Meßkanalkörper 1 anzuformen, derart, daß die Rohrleitungsanschlüsse und der Meßkanalkörper zusammen mit den darin eingebetteten Elektroden 3 und 4 und den zugehörigen Meßsignalleitungen und Anschlüssen ein einheitliches und einheitlich zu handhabendes Bauteil darstellen.

## Patentansprüche

1. Induktiver Durchflußmesser
- mit einem Meßkanalkörper (1), welcher einen Strömungskanalabschnitt (2) mit elektrisch isolierender Innenwand und zwei einander über einen Querschnitt des Strömungskanalabschnittes diametral gegenüberstehende, dem zu untersuchenden Strömungsmittelstrom ausgesetzte Elektroden (3, 4) enthält,
- mit isoliert zu den Elektroden geführten Meßsignalleitungen (5, 6),
- mit einem Magnetfelderzeugungssystem (15, 16, 25, 26, 27; 30, 32, 33, 24, 31), mittels welchem ein den Strömungskanalabschnitt (2) im Bereich des genannten Querschnittes durchsetzendes, im wesentlichen senkrecht zur Verbindungslinie zwischen den Elektroden (3, 4) und senkrecht zur Längsachse des Strömungskanalabschnittes orientiertes Magnetfeld zwischen Polschuhen (15, 16) des Magnetfelderzeugungssystems errichtet wird, welche auf einander gegenüberliegenden Seiten des Meßkanalkörpers (1) angeordnet sind, und wobei
der Meßkanalkörper auf seinen den Polschuhen (15, 16) benachbarten, einander gegenüberliegenden Wandseiten der jeweiligen Polschuhform angepaßte Vertiefungen (9, 10) zur Aufnahme der dem Strömungskanalabschnitt zugewandten Polschuhteile aufweist, derart, daß mindestens bereichsweise die einander zugekehrten Polschuhflächen über Meßkanalkörpermaterial (13, 14) verringerter Wandstärke vom Strömungskanalabschnitt (2) getrennt sind,
**dadurch gekennzeichnet, daß** die Vertiefungen (9, 10) der Wandseiten des Meßkanalkörpers (1) mindestens einen axialen, leistenförmigen (20) oder radialen, kreisringsektorförmigen Steg (11, 12) aus Meßkanalkörpermaterial enthalten, welcher einen Meßsignalleitungsabschnitt (6) enthält und der in einer entsprechend geformten axialen bzw. radialen Ausnehmung (21) oder Unterbrechung eines Polschuhteils oder der Polschuhteile Aufnahme findet.

2. Durchflußmesser nach Anspruch 1, **dadurch gekennzeichnet, daß** die Polschuhe (15, 16) jeweils an insbesondere laminierte oder aus Pulververbundwerkstoff hergestellte Kerne (25; 30) des Magnetfelderzeugungssystems angeformt sind und in Radialrichtung mit Bezug auf die Längsachse des Strömungskanalabschnittes (2) des Meßkanalkörpers (1) in dessen Vertiefungen (9, 10) eingeschoben sind.

3. Durchflußmesser nach Anspruch 1 oder 2, **dadurch gekennzeichnet, daß** die Polschuhflächen im zusammengebauten Zustand des Durchflußmessers gegen den dünnwandigen Grund der Vertiefungen (9, 10) angedrückt und den dünnwandigen Bereichen (13, 14) gegen einen erhöhten Innendruck im Strömungskanalabschnitt (2) Abstützung gewährend ausgebildet sind.

4. Durchflußmesser nach Anspruch 2 oder 3, **dadurch gekennzeichnet, daß** das Magnetfelderzeugungssystem über den Eingriff seiner Polschuhteile in die Vertiefungen (9, 10) des Meßkanalkörpers (1) an diesem gehalten ist.

5. Durchflußmesser nach einem der Ansprüche 1 bis 4, **dadurch gekennzeichnet, daß** der Meßkanalkörper (1) als Kunststoff-Spritzgußteil ausgeführt ist.

6. Durchflußmesser nach Anspruch 5, **dadurch gekennzeichnet, daß** der Meßkanalkörper (1) die Meßsignalleitung (5, 6) als eingegossene Leiterteile enthält.

7. Durchflußmesser nach Anspruch 6, **dadurch gekennzeichnet, daß** die Meßsignalleitungen (5, 6) als Leiterfolienzuschnitte ausgebildet sind.

8. Durchflußmesser nach Anspruch 7, **dadurch gekennzeichnet, daß** die Elektroden (3, 4) an die aus Elektrodenmaterial gefertigten Leiterfolienzuschnitte einstückig angeformt sind.

## Claims

1. An inductive flow meter
with a measurement channel body (1) that incorporates a flow channel section (2) with electrically insulating inner wall and two electrodes (3, 4) that are diametrically opposed to each other across a cross section of the flow channel section and exposed to the medium that is under investigation,
with measurement signed lines (5,6) that lead to the electrodes insulatedly,
with a magnetic field generating system (15, 16, 25, 26, 27; 30, 32, 33, 24, 31), with which a magnetic field that passes through the flow channel section (2) in the area of said cross section, which is essentially perpendicular to the connecting line between the electrodes (3, 4) and perpendicular to the longitudinal axis of the flow channel section (2) is established between the pole shoes of the magnetic field generating system, said pole shoes being arranged on opposing sides of the measurement channel body (1), and wherein,
on its side walls that are adjacent to the pole shoes (15, 16) and opposite to each other, the measurement channel body (1) comprises recesses (9, 10) that match the shape of the respective pole shoe and accommodate the pole shoe portions that are directed towards the flow channel cross section in such a way that at least in some areas the pole shoe surfaces that face each other are separated from the flow channel section (2) by measurement channel body material (13, 14) that is of reduced thickness,
**characterized in that**
the recesses (9, 10) of the side walls of the measurement channel body (1) incorporate at least one axial, rail-like (20) or radial circular ring sector shaped curved rib (11,12) that is of measurement channel body material, this rib containing a measurement signal line section (6) and being situated in an appropriately shaped axial or radial recess (21) or break in a pole shoe portion or the pole shoe portions.

2. Flow meter in accordance with claim 1, **characterized in that** the pole shoes (15, 16) are respectively formed on particularly laminated or powder-compound-material produced cores (25; 30) of the magnetic field generating system and are inserted in radial direction, with regard to the longitudinal axis of the flow channel section (2) of the measurement channel body (1), into the recesses (9,10) thereof.

3. Flow meter in accordance with claim 1 or 2, **characterized in that** the pole shoe surfaces, in the assembled status of the flow meter, are pressed against the bottom of small wall thickness of the recesses (9, 10), and are adapted to give support to the areas (13, 14) of small wall thickness against an increased inner pressure within the flow channels section (2).

4. Flow meter in accordance with claim 2 or 3, **characterized in that** the magnetic field generating system is held on the measurement channel body (1) by engagement of the pole shoe portion of the magnetic field generating system with the recesses (9,10) of the measurement channel body (1).

5. Flow meter in accordance with one of the claims 1 to 4, **characterized in that** the measurement channel body (1) has the shape of a plastic-injection-molded part.

6. Flow meter in accordance with claim 5, **characterized in that** the measurement channel body (1) comprises the measurement signal lines (5, 6) as molded-in conductor parts.

7. Flow meter in accordance with claim 6, **characterized in that** the measurement signal lines (5, 6) are formed of cut out conductive foil blanks.

8. Flow meter in accordance with claim 7, **characterized in that** the electrodes (3, 4) are integrally formed on the cut out conductive foil blanks produced from electrode material.

## Revendications

1. Débitmètre inductif comprenant :
- un corps de canal de mesure (1) qui contient un segment de canal de flux (2) avec une paroi intérieure isolante électriquement et deux électrodes (3, 4) diamétralement opposées sur une section transversale du segment de canal de flux et exposées au milieu du courant du flux à étudier,
- des lignes de signalisation de mesure (5, 6) isolées menant aux électrodes,
- un système (15, 16, 25, 26, 27; 30, 32, 33, 24, 31) de production de champs magnétiques au moyen duquel on établit un champ magnétique qui traverse le segment de canal de flux (2) dans la zone de la section transversale mentionnée et qui est orienté de manière essentiellement perpendiculaire à la ligne de jonction entre les électrodes (3, 4) et perpendiculaire à l'axe longitudinal du segment de canal de flux, entre les pièces polaires (15, 16) du système de production de champs magnétiques qui sont situées sur les côtés opposés du corps de canal de mesure (1), et
- le corps de canal de mesure étant pourvu, sur ses côtés de paroi opposés contigus aux pièces polaires (15, 16), de creux (9, 10) adaptés à la forme des pièces polaires respectives et destinés à recevoir les parties de pièces polaires tournées vers le côté du segment de canal de flux, de manière à ce que les surfaces des pièces polaires tournées l'une vers l'autre soient, au moins par endroits, séparées du segment de canal de flux (2) par le matériau (13, 14) du corps de canal de mesure présentant une épaisseur de paroi réduite,
**caractérisé en ce que** les creux (9, 10) des côtés de paroi du corps de canal de mesure (1) contiennent au moins un élément transversal (11, 12) axial en forme de barre (20) ou radial en forme de segment d'anneau de cercle, fait du matériau du corps de canal de mesure, qui contient un segment de ligne de signalisation de mesure (6) et qui est reçu dans un creux (21) ou un vide d'une partie de pièce polaire ou des parties de pièces polaires de forme axiale resp. radiale correspondante.

2. Débitmètre selon la revendication 1, **caractérisé en ce que** les pièces polaires (15, 16) sont à chaque fois formées, notamment, sur des noyaux (25 ; 30) du système de production de champs magnétiques stratifiés ou fabriqués à partir d'un matériau composite à base de poudre, et sont insérées dans les creux (9, 10) du corps de canal de mesure (1) dans la direction radiale par rapport à l'axe longitudinal du segment de canal de flux (2) du corps (1).

3. Débitmètre selon l'une des revendications 1 ou 2, **caractérisé en ce que** les surfaces des pièces polaires sont pressées, lorsque le débitmètre est assemblé, contre le fond à paroi mince des creux (9, 10), et sont exécutées de manière à fournir un support aux zones à paroi mince (13, 14) contre une pression interne élevée dans le segment de canal de flux (2).

4. Débitmètre selon l'une des revendications 2 ou 3, **caractérisé en ce que** le système de production de champs magnétiques est maintenu sur le corps de canal de mesure (1) grâce à l'emboîtement de ses parties de pièces polaires dans les creux (9, 10) du corps de canal de mesure (1).

5. Débitmètre selon l'une des revendications 1 à 4, **caractérisé en ce que** le corps de canal de mesure (1) est exécuté en tant que pièce en plastique moulée par injection.

6. Débitmètre selon la revendication 5, **caractérisé en ce que** le corps de canal de mesure (1) contient les lignes de signalisation de mesure (5, 6) sous la forme de pièces conductrices moulées.

7. Débitmètre selon la revendication 6, **caractérisé en ce que** les lignes de signalisation de mesure (5, 6) sont exécutées en tant que parties découpées dans une feuille conductrice.

8. Débitmètre selon la revendication 7, **caractérisé en ce que** les électrodes (3, 4) sont solidaires des parties découpées dans une feuille conductrice qui sont faites dans le matériau des électrodes.
